# EUROPEAN PATENT SPECIFICATION

(11) **EP 1 211 167 B1**
(45) Date of publication and mention of the grant of the patent: **12.09.2007**
(21) Application number: 01128646.5
(22) Date of filing: 30.11.2001
(51) Int. Cl.: B62D 33/06, B60H 1/00, B60H 1/34

(54) **Wall member for the passenger space of a vehicle**
Wand für einen Kraftfahrzeuginnenraum
Paroi d'habitacle pour véhicule

(30) Priority: 01.12.2000 IT TO001126
(43) Date of publication of application: 05.06.2002
(73) Proprietor: IVECO S.p.A., 10156 Torino (IT)
(72) Inventor: Nicosia, Biagio, 10141 Torino (IT)
(74) Representative: Gervasi, Gemma

(56) References cited:
- DE-A- 19 832 738
- FR-A- 2 756 232
- US-A- 2 483 721
- US-A- 5 052 283
- US-A- 5 099 649
- US-A- 6 004 203

## Description

The present invention relates to a wall member for the passenger space of a vehicle, in particular for an industrial automobile vehicle as defined in the preamble of claim 1 which is described in DE-A-19832738.

As is known, wall members for the passenger spaces of industrial vehicles are generally formed by a metal or plastic structure covered in the interior of the passenger space with a covering material, which is soft in most cases, such as a fabric. The cabin of the automobile vehicle generally needs to be insulated to ensure that an appropriate temperature is maintained in the passenger space in order to ensure that the passenger space occupants are as comfortable as possible.

In order to ensure the best possible comfort, the atmosphere is brought to the temperature that the occupants of the passenger space consider appropriate by introducing cold or hot air from the air conditioning plant via the ventilation vents.

The introduction of air is therefore concentrated in only some areas of the passenger space, thereby creating substantial temperature gradients within this passenger space. The air is introduced, moreover, in the form of concentrated jets that may strike particular areas of the bodies of the passenger space occupants and that may be uncomfortable and harmful to their health.

The object of the present invention is to provide a cabin for a vehicle which is free from the above-described drawbacks and which, in particular, ensures an air supply which is regular and uniformly distributed throughout the cabin.

The present invention therefore relates to a wall member for the passenger space of a vehicle comprising the features of claim 1.

A preferred embodiment of the present invention is set out in further detail in the following description given purely by way of non-limiting example and made with reference to the accompanying drawings, in which:
Fig. 1 shows a cabin for an industrial vehicle comprising wall members in accordance with the present invention;
Fig. 2 is a front view of a wall member of the present invention showing a wall member of the present invention;
Fig. 3 is a view in cross-section along the line III-III of Fig. 2;
Fig. 4 is a cross-section, on an enlarged scale, through a detail of the wall member along the line IV-IV of Fig. 2.

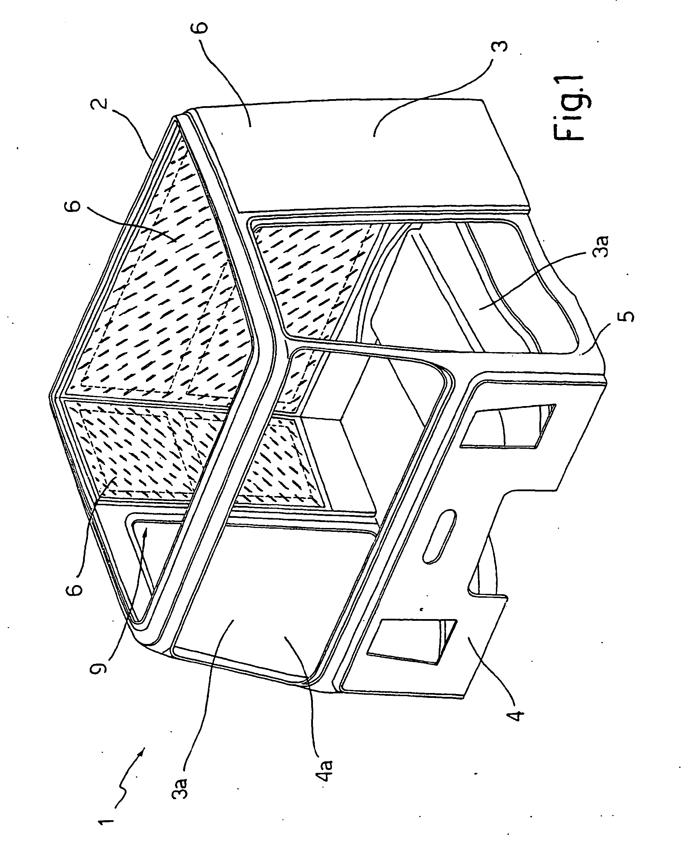

In Fig. 1, a cabin for an industrial vehicle is shown overall by 1 and comprises a rear wall 2, side walls 3 defining respective door spaces 3a and a front wall 4 provided with an upper space 4a for the windscreen (not shown).

In detail, the cabin comprises a frame 5, formed by a plurality of longitudinal, transverse and upright members fixed on the frame 5 and wall members 6 fixed on the frame 5 and bounding the passenger space 9 of the cabin 1.

Advantageously, the wall members 6 form the rear wall 2 and the fixed portions of the side walls 3.

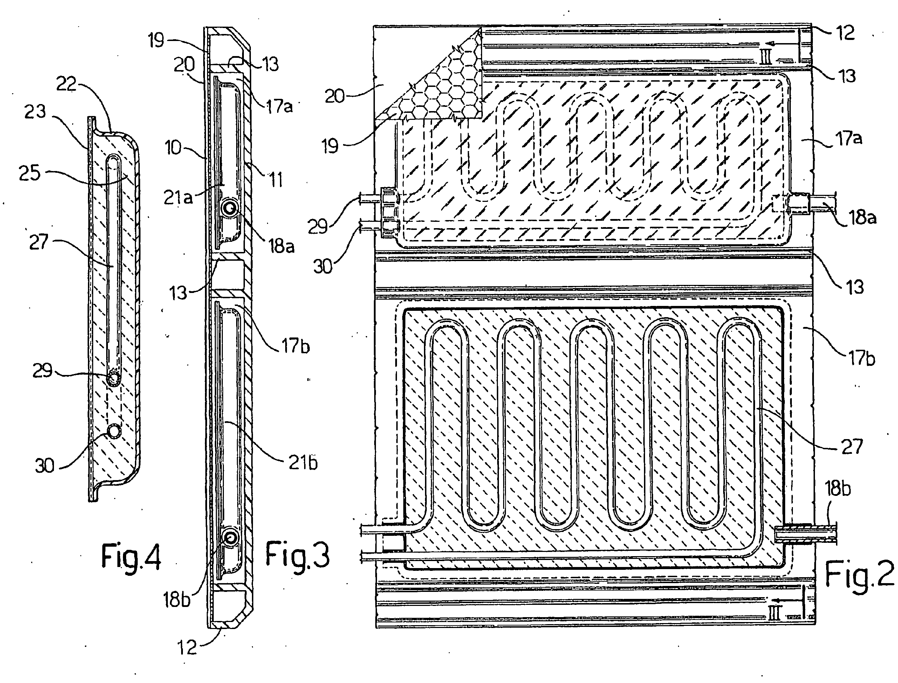

As shown in detail in Fig. 2, each wall member 6 of rectangular shape comprises an outer panel 11 facing the exterior of the cabin and forming a bodywork member of the cabin 1 and an inner panel 10 facing the passenger space 9.

The outer panel 11 may advantageously be formed from plastic material or from metal sheet, and has its outwardly facing surface of a type appropriate for painting, and a peripheral edge 12 folded towards the inner panel 10. The outer panel 11 further comprises a pair of closed ribs 13 extending towards the inner panel 10 and bounding therewith respective closed cavities 17a, 17b of a substantially rectangular shape.

The inner panel 10 is coupled to the outer panel 11 by means of welding, mechanical connection or gluing on the projections 13 and the folded ends 12. Each of the closed cavities 17a, 17b communicates with the ventilation/air conditioning plant of the vehicle (not shown) by means of respective connections 18a, 18b so that air can be introduced into these cavities 17a, 17b.

The inner panel 10 comprises a first rigid bearing layer 19 having a honeycomb cellular structure with cells open in the direction perpendicular to the plane of the layer and a second covering layer 20 formed by an air-permeable material adapted to distribute the air introduced by the connections 18a, 18b into the cavities 17a, 17b, via its whole surface and in a uniformly distributed way, into the passenger space 9. The permeable material may for instance be a non-woven fabric.

The cavities 17a and 17b further house bags 21a and 21b for insulation and air distribution.

Each bag 21a, 21b, as shown in detail in Fig. 4, comprises a spine 22 preferably formed from a sheet of plastic material and facing the outer panel 11 and a front baffle 23 connected to the spine 22 and air-permeable. Each bag 21a, 21b forms a closed chamber 25 filled with transpiring material such as, for instance, cotton fibre or synthetic materials, and houses a duct 27 for the circulation of hot water which is of serpentine shape in order to ensure an improved heat exchange.

The duct 27 is provided with an inlet connection 29 and an outlet connection 30 adapted to be connected to the heating plant of the vehicle. The respective connections 18a, 18b which introduce the air into the chamber 25 advantageously form part of the bags 21.

In operation, the air from the ventilation/air conditioning plant is supplied into the chamber 25 of the bags 21a, 21b which are pressurised and distribute the air via the baffle 23 to the inner panel 10 of the wall member 6.

The air in the chambers 25 may be heated by the duct 27.

A further operation to distribute air is carried out by the inner panel 10, via which the air is finally introduced into the passenger space 9.

An examination of the characteristic features of the wall member for a vehicle embodied in accordance with the present invention shows the advantages that it can provide.

In particular, it makes it possible to ensure that the vehicle occupants are comfortable enough by providing uniform heating and cooling of the passenger space, without concentrated jets of air.

It will be appreciated that modifications and variations may be made to the wall member 6 for the passenger space 9 of a vehicle as described and illustrated without thereby departing from the protective scope of the present invention.

For instance, the inner panel 10 may be formed by a single layer which is sufficiently rigid, but air-permeable. Moreover, the shapes of the walls may be varied and the inner chambers 25 may be omitted, in which case the air can be distributed in a satisfactory manner with the inner panel 10, or replaced by any insulating material.

## Claims

1. A wall member (6) for the passenger space (9) of a vehicle comprising a first outer panel (11) forming a bodywork member of the vehicle and at least a second inner panel (10) adapted to face the interior of the passenger space, the outer panel (11) and the inner panel (10) defining at least one closed cavity (17a, 17b) , whereby the wall member (6) comprises means (18a, 18b) for connecting the cavity (25) with a ventilation/air conditioning plant of the vehicle, these connection means comprising at least one inlet (18a, 18b) for the air from the ventilation/air conditioning plant of the vehicle, and whereby the inner panel (10) is formed from a permeable material such that the air is distributed into the passenger space (9) via the whole surface of this panel, said cavities (17a, 17b) housing air distribution means (21a, 21b) comprising a bag formed by an impermeable member (22) and by a second member (23) which are coupled together to form a closed chamber (25), **characterised in that** the closed chamber (25) houses a duct (27) for the circulation of hot water and connection means for the connection of this duct with a heating plant of the vehicle.

2. A wall member (6) for the passenger space (9) of a vehicle as claimed in claim 1, **characterised in that** the inner panel (10) comprises a bearing layer (19) and a permeable covering layer (20).

3. A wall member (6) for the passenger space (9) of a vehicle as claimed in claim 2, **characterised in that** the bearing layer (19) has a honeycomb cellular structure.

4. A wall member (6) for the passenger space (9) of a vehicle as claimed in claim 2 or 3, **characterised in that** the soft layer (20) is of non-woven fabric.

5. A wall member (6) for the passenger space (9) of a vehicle as claimed in any of the preceding claims, **characterised in that** that the closed chamber (25) is at least partially filled with transpiring material.

6. A wall member (6) for the passenger space (9) of a vehicle as claimed in any of the preceding claims, **characterised in that** the duct (27) is of serpentine shape.

7. A cabin (1) for an industrial automobile vehicle comprising a rear wall (2) and a pair of side walls (3), **characterised in that** it comprises at least one wall member (6) as claimed in the preceding claims.

8. A cabin (1) for an industrial automobile vehicle as claimed in claim 7, **characterised in that** the rear wall (2) and the side walls (3) each comprise at least one wall member (6).

## Patentansprüche

1. Wandelement (6) für den Innenraum (9) eines Fahrzeugs, welches umfasst: eine erste, nämlich äußere Tafel (11), die ein Karosserieteil des Fahrzeugs darstellt, und mindestens eine zweite, nämlich innere Tafel (10), die so ausgelegt ist, dass sie zum Innern des Fahrzeuginnenraums gerichtet ist, wobei die äußere Tafel (11) und die innere Tafel (10) mindestens einen umschlossenen Hohlraum (17a, 17b) festlegen und das Wandelement (6) Mittel (18a, 18b) umfasst, um den Hohlraum (25) an die Belüftungs-/Klimaanlage des Fahrzeugs anzuschließen, wobei diese Verbindungsmittel mindestens eine Eintrittsöffnung (18a, 18b) für die Luft von der Belüftungs-/Klimaanlage des Fahrzeugs umfassen und die innere Tafel (10) dergestalt aus einem durchlässigen Material gebildet ist, dass die Luft über die gesamte Fläche dieser Tafel in den Fahrzeuginnenraum hinein verteilt wird, und wobei die genannten Hohlräume (17a, 17b) Luftverteilungsmittel (21a, 21b) beherbergen, welche eine Tasche umfassen, die aus einem undurchlässigen Teil (22) und einem zweiten Teil (23) gebildet ist, welche dergestalt miteinander verbunden sind, dass sie eine geschlossene Kammer (25) bilden, **dadurch gekennzeichnet, dass** die geschlossene Kammer (25) eine Leitung (27) zur Zirkulation von heißem Wasser sowie Verbindungsmittel für den Anschluss dieser Leitung an die Heizungsanlage des Fahrzeugs beherbergt.

2. Wandelement (6) für den Innenraum (9) eines Fahrzeugs gemäß Anspruch 1, **dadurch gekennzeichnet, dass** die innere Tafel (10) eine tragende Schicht (19) und eine durchlässige abdeckende Schicht (20) umfasst.

3. Wandelement (6) für den Innenraum (9) eines Fahrzeugs gemäß Anspruch 2, **dadurch gekennzeichnet, dass** die tragende Schicht (19) eine zellförmige Wabenstruktur aufweist.

4. Wandelement (6) für den Innenraum (9) eines Fahrzeugs gemäß Anspruch 2 oder 3, **dadurch gekennzeichnet, dass** die weiche Schicht (20) aus einem Vlieswirkstoff besteht.

5. Wandelement (6) für den Innenraum (9) eines Fahrzeugs gemäß irgend einem der vorangehenden Ansprüche, **dadurch gekennzeichnet, dass** die geschlossene Kammer (25) mindestens zum Teil mit einem atmungsfähigen Material gefüllt ist.

6. Wandelement (6) für den Innenraum (9) eines Fahrzeugs gemäß irgend einem der vorangehenden Ansprüche, **dadurch gekennzeichnet, dass** die Leitung (27) eine Serpentinengestalt aufweist.

7. Fahrerkabine (1) für ein Arbeitskraftfahrzeug, welches eine Rückwand (2) und ein Paar von Seitenwänden (3) aufweist, **dadurch gekennzeichnet, dass** sie mindestens ein Wandelement (6) gemäß den vorangehenden Ansprüchen umfasst.

8. Fahrerkabine (1) für ein Arbeitskraftfahrzeug gemäß Anspruch 7, **dadurch gekennzeichnet, dass** die Rückwand (2) und die Seitenwände (3) jeweils mindestens ein Wandelement (6) umfassen.

## Revendications

1. Paroi (6) pour l'habitacle (9) d'un véhicule comprenant un premier panneau extérieur (11) formant un élément de caisse du véhicule et au moins un second panneau intérieur (10) apte à être orienté vers l'intérieur de l'habitacle, le panneau extérieur (11) et le panneau intérieur (10) définissant au moins une cavité fermée (17a, 17b), par quoi la paroi (6) comprend des moyens (18a, 18b) pour relier la cavité (25) à une installation de ventilation/conditionnement d'air du véhicule, ces moyens de connexion comprenant au moins une entrée (18a, 18b) pour l'air de l'installation de ventilation/conditionnement d'air du véhicule, et par quoi le panneau intérieur (10) est réalisé à partir d'un matériau perméable de telle sorte que l'air est distribué dans l'habitacle (9) par l'intermédiaire de la surface totale de ce panneau, lesdites cavités (17a, 17b) logeant des moyens de distribution d'air (21a, 21b), comprenant un sac formé par un élément imperméable (22) et par un second élément (23) qui sont couplés ensemble pour former une chambre fermée (25), **caractérisée en ce que** la chambre fermée (25) renferme une conduite (27) pour la circulation de l'eau chaude et des moyens de connexion pour la connexion de cette conduite à une installation de chauffage du véhicule.

2. Paroi (6) pour l'habitacle (9) d'un véhicule selon la revendication 1, **caractérisée en ce que** le panneau intérieur (10) comprend une couche de support (19) et une couche de recouvrement perméable (20).

3. Paroi (6) pour l'habitacle (9) d'un véhicule selon la revendication 2, **caractérisée en ce que** la couche de palier (19) présente une structure alvéolaire en nid d'abeilles.

4. Paroi (6) pour l'habitacle (9) d'un véhicule selon la revendication 2 ou 3, **caractérisée en ce que** la couche molle (20) est réalisée à partir d'une étoffe non-tissée.

5. Paroi (6) sur l'habitacle (9) d'un véhicule selon l'une quelconque des revendications précédentes, **caractérisée en ce que** la chambre fermée (25) est au moins partiellement remplie d'un matériau apte à transpirer.

6. Paroi (6) pour l'habitacle (9) d'un véhicule selon l'une des revendications précédentes, **caractérisée en ce que** la conduite (27) est configurée en serpentin.

7. Cabine (1) pour un véhicule automobile industriel comprenant une paroi arrière (2) et une paire de parois latérales (3), **caractérisée en ce qu'**elle comprend au moins une paroi (6) telle que revendiquée dans les revendications précédentes.

8. Cabine (1) pour un véhicule automobile industriel selon la revendication 7, **caractérisée en ce que** la paroi arrière (2) et les parois latérales (3) comprennent chacune au moins une paroi (6).
